# EUROPÄISCHE PATENTSCHRIFT

(11) **EP 1 583 898 B1**
(45) Veröffentlichungstag und Bekanntmachung des Hinweises auf die Patenterteilung: **15.04.2009**
(21) Anmeldenummer: 03785571.5
(22) Anmeldetag: 13.12.2003
(51) Int. Cl.: F02F 11/00, F16J 15/06, F16J 15/12, F16J 15/08

(54) **VERFAHREN ZUR HERSTELLUNG EINER GUMMIFORMDICHTUNG**
METHOD FOR PRODUCING A MOULDED RUBBER SEAL
PROCEDE POUR PRODUIRE UN JOINT MOULE EN CAOUTCHOUC

(30) Priorität: 15.01.2003 DE 10301235
(43) Veröffentlichungstag der Anmeldung: 12.10.2005
(73) Patentinhaber: Federal-Mogul Sealing Systems Bretten GmbH, 75015 Bretten (DE)
(72) Erfinder: WALZ, Axel, 75053 Gondelsheim (DE); KRATZMEIER, Werner, 75015 Bretten (DE)
(74) Vertreter: Kurig, Thomas
(86) Internationale Anmeldenummer: PCT/DE2003/004123
(87) Internationale Veröffentlichungsnummer: WO 2004/067941

(56) Entgegenhaltungen:
- DE-A- 4 134 316
- DE-A- 4 223 486
- DE-A- 10 022 172
- DE-A- 19 822 772
- DE-U- 20 022 474
- DE-U- 20 105 250
- DE-U- 20 109 901
- FR-A- 2 681 378

## Beschreibung

Die Erfindung betrifft ein Verfahren zur Erzeugung von Zentriermitteln im Bereich einer metallisch verstärkten Gummiformdichtung.

Das Gebrauchsmuster DE 20105250 U1 offenbart eine Flachdichtung mit Klammerlaschen zu ihrer Fixierung auf einer Dichtfläche. Es handelt sich hierbei um eine metallische Flachdichtung bei der kein Elastomerwerkstoff angespritzt ist und nicht um eine Gummiformdichtung.

Aus der DE 4134316 A1 ist ein Gehäuseverschlußdeckel für Kurbelwellengehäuse zu entnehmen. In den Schraubendurchgangsgängen sind axiale Vorsprünge vorgesehen, die zur Zentrieung dienen und die mit Elastomerwerkstoff umspritzt sein können. Eine Verbindung zwischen den Elastomeren Dichtlippen und dem Elastomerwerkstoff ist nicht vorgesehen, so dass die Vorsprünge in einem separaten Arbeitsgang hergestellt werden müssen. Mit einer Gummiformdichtung hat dieser Gehäusedeckel nichts gemeinsam.

Gummiformdichtungen kommen beispielsweise im Bereich von Ventildeckeln von Brennkraftmaschinen oder ähnlichen abzudichtenden Gehäuseteilen zum Einsatz. Diese zum Teil relativ forminstabilen Gummiformdichtungen müssen jedoch lagegerecht im abzudichtenden Bereich montiert werden. Hierzu werden Montagehilfen, wie beispielsweise eingepreßte oder eingenietete Metallstifte oder angespritzte Kunststoff- bzw. Elastomerkonturen als Zentriermittel eingesetzt. Durch diese zusätzlichen Metallstifte wird die Wirtschaftlichkeit der bisher erzeugten Gummiformdichtungen nachteilig beeinflußt.

Bei Einsatz von angespritzten Kunststoff- oder Elastomerkonturen sind unter Umständen negative Einflüsse im Hinblick auf einen Elastomer-Materialschwund zu verzeichnen.

Der DE-C 4 134 316 ist ein Gehäuseverschlußdeckel zu entnehmen, mit mehreren in einer radialen Flanschfläche des Deckels angeordneten am Umlauf verteilten Schraubendurchgangslöchern sowie Mitteln zur lagegerechten Fixierung und Zentrierung des Deckels gegenüber einem Kurbelwellengehäuse. Die Zentriermittel werden durch mindestens zwei axial in Richtung des Kurbelwellengehäuses sich erstreckende Vorsprünge gebildet, die einstückig mit der radialen Flanschfläche verbunden sind. Die Vorsprünge sind in mit den Schraubenduchgangslöchem korrespondierenden Bohrungen einsteckbar. Am Außenumfang der Vorsprünge kann eine elastische Schicht angeordnet werden, die in einem separaten Arbeitsgang am Gehäusedeckel angeformt wird.

Durch die DE-C 4 223 486 ist eine Dichtung bekannt geworden, mit einer Einlage, die von elastomerem Material umschlossen ist, wobei die Einlage Löcher zur Aufnahme von Schrauben aufweist und im Bereich der Löcher aus der Einalge herausgeformte Verpressungsbegrenzer vorgesehen sind. Letztere sind durch Umklappen der Lochränder gebildet, so dass im Lochbereich eine doppelte Schichtdicke der Einlage erzeugt wird.

Der Erfindung liegt die Aufgabe zugrunde, ein Verfahren zur Erzeugung von Zentriermitteln im Bereich einer metallisch verstärkten Gummiformdichtung bereitzustellen, das eine hohe Positioniergenauigkeit der Gummiformdichtung mit sich bringt. Darüber hinaus soll eine metallisch verstärkte Gummiformdichtung konzipiert werden, die einfach herstellbar und sicher bei der Positionierung im Abdichtungsbereich eingesetzt werden kann.

Diese Aufgabe wird erfindungsgemäß durch die Merkmale des Patentanspruch 1 gelöst. Vorteilhafte Weiterbildungen des erfindungsgemäßen Verfahrens sind den zugehörigen Unteransprüchen zu entnehmen.

Gegenüber dem allgemeinen Stand der Technik wird somit eine Möglichkeit aufgezeigt, integrale Zentriermittel im Bereich der Gummiformdichtung zu erzeugen. Durch diese Maßnahme wird eine wirtschaftliche Lösung vorgestellt, die keine zusätzlichen Bauteile (Metallstifte oder dergleichen) beinhaltet und eine sehr hohe Positioniergenauigkeit des mit Elastomermaterial umspritzten Stiftes mit sich bringt.

Negative Einflüsse des Elastomerschwundes können stark reduziert werden. Je nach den Anforderungen an die Zentrierung kann eine Verstärkung der Elastomergeometrie realisiert werden, wobei auch größere Höhen des Zentrierstiftes denkbar sind.

Der Erfindungsgegenstand ist anhand eines Ausführungsbeispieles in der Zeichnung dargestellt und wird wie folgt beschrieben. Es zeigen:
- Figur 1: Teilansicht eines Metallelementes mit einem Freischnitt und herausgeformtem Material;
- Figur 2: Teilansicht gemäß Figur 1 mit angespritzter Gummiformdichtung;
- Figur 3: Querschnitt durch das Metallelement im Bereich des herausgeformten mit Elastomerwerkstoff umspritzten Materiales.

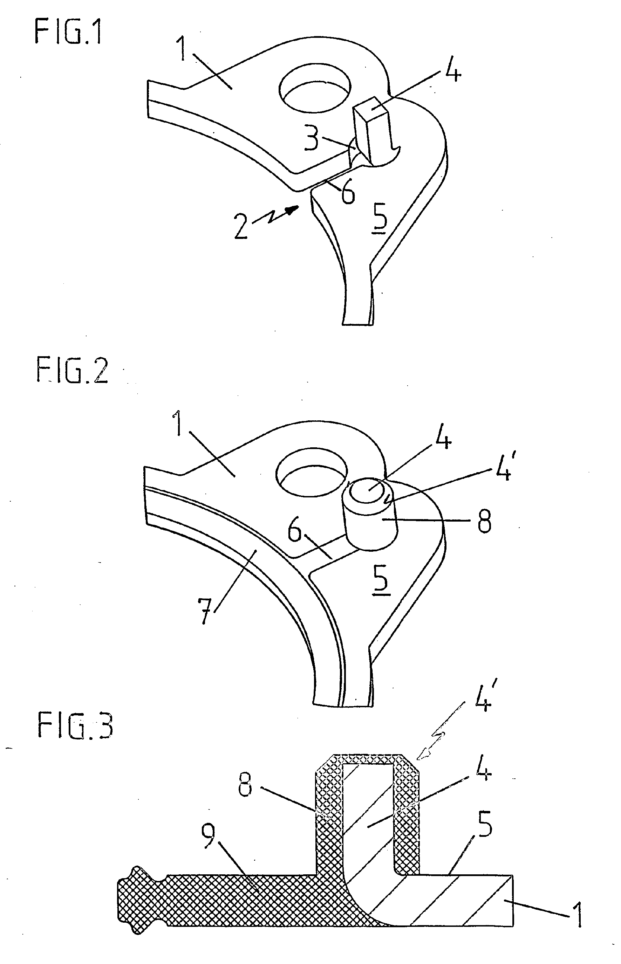

Figur 1 zeigt als Teilansicht ein Metallelement 1, in dessen Randbereich 2 ein Freischnitt 3 vorgebbarer Kontur eingebracht wurde. Das freigeschnittene Material 4 wird unter Bildung einer etwa stiftartigen Kontur aus der Ebene 5 des Metallelementes 1 im wesentlichen um 90° herausgeformt (herausgebogen), so dass ein Freiraum 6 erzeugt wird, der einen Anspritzkanal bildet.

In Figur 2 ist das Metallelement 1 dargestellt, an welches nun die Gummiformdichtung 7 angespritzt ist. Über den Freiraum 6 wurde im gleichen Arbeitsgang Elastomerwerkstoff in Richtung des etwa stiftartig herausgeformten Materiales 4 geführt, wobei das Material 4 vom Elastomerwerkstoff 8 umspritzt wurde. Der ursprünglich mit einem mehreckigen Querschnitt versehene Stift 4 weist nach seiner Umspritzung mit Elastomerwerkstoff 8 nun eine im Querschnitt etwa kreisförmige Kontur auf.

Figur 3 zeigt einen Querschnitt durch das stiftartige Material 4 im Anschluß an seine Ummantelung mit dem Elastomerwerkstoff 8. Es ist erkennbar, dass das Material 4 um etwa 90° aus der Ebene 5 des Metallelementes 1 herausgeformt ist. Mit dem Bezugszeichen 9 ist der im Freiraum 6 (Anspritzkanal) gegebene Elastomerwerkstoff definiert.

## Patentansprüche

1. Verfahren zur Erzeugung von Zentriermitteln (4,8) im Bereich einer metallisch verstärkten Gummiformdichtung (7), indem im Randbereich (2) des Metallelementes (1) mindestens ein Freischnitt (3) eingebracht, das freigewordene Material (4) aus der Ebene (5) des Metallelementes (1) herausgeformt wird, um einen Freiraum (6) zu erzeugen, der einen Anspritzkanal bildet, durch den Elastomerwerkstoff (8) im gleichen Arbeitssgang zur Erzeugung der Gummiformdichtung (7), in Richtung des Materials(4) geführt wird, so dass das Material (4) zur Erzeugung einer vorgebbaren Endkontur mit Elastomerwerkstoff (8) umspritzt wird.

2. Verfahren nach Anspruch 1, **dadurch gekennzeichnet, dass** das Material (4) unter Bildung einer etwa stiftförmigen Kontur um etwa 90° aus der Ebene (5) des Metallelementes (1) herausgeformt wird.

3. Verfahren nach einem der Ansprüche 1 bis 2, **dadurch gekennzeichnet, dass** das Material (4) mit polygonalem Querschnitt aus dem Metallelement (1) herausgeformt und anschließend zu einer im Querschnitt im wesentlichen kreisförmigen Endkontur mit Elastomerwerkstoff (8) umspritzt wird.

## Claims

1. A method for producing centering means (4, 8) in the area of a moulded rubber seal (7) reinforced with metal, by realizing at least one cut-out (3) in the edge area (2) of the metal element (1), by shaping the freed material (4) from the plane (5) of the metal element (1) to generate a free space (6) forming a runner through which the elastomer material (8) is conveyed in the direction of the material (4) in the same work step as for producing the moulded rubber seal (7) so that the elastomer material (8) is moulded around the material (4) to produce a pre-definable final contour.

2. The method of claim 1, **characterized in that** the material (4) is shaped by forming of an approximately pin-shaped contour at about 90° from the plane (5) of the metal element (1).

3. The method of any of the claims 1 to 2, **characterized in that** the material (4) is shaped with polygonal cross section out of the metal element (1), and subsequently the elastomer material (8) is moulded around to a cross section having circularly shaped final contour.

## Revendications

1. Procédé de génération de moyens de centrage (4, 8) dans la zone d'un joint moulé en caoutchouc (7) renforcé métalliquement, en pratiquant dans la zone de bord (2) de l'élément métallique (1) au moins une découpe libre (3), en démoulant le matériau (4) devenu libre hors du plan (5) de l'élément métallique (1) afin de générer un espace libre (6) qui forme un canal de moulage par injection, par lequel est guidé un matériau en élastomère (8) dans le même passage de génération du joint moulé en caoutchouc (7) en direction du matériau (4) de sorte que le matériau (4) soit enrobé par injection de matériau en élastomère (8) pour la génération d'un contour d'extrémité prescriptible.

2. Procédé selon la revendication 1, **caractérisé en ce que** le matériau (4) est démoulé en formant un contour à peu près en forme de goupille à environ 90 ° hors du plan (5) de l'élément métallique (1).

3. Procédé selon l'une quelconque des revendications 1 à 2, **caractérisé en ce que** le matériau (4) doté d'une section polygonale est démoulé hors de l'élément métallique (1) et est ensuite enrobé par injection de matériau en élastomère (8) pour former un contour d'extrémité essentiellement circulaire en section.
